# FASCICULE DE BREVET EUROPEEN

(11) **EP 1 660 857 B1**
(45) Date de publication et mention de la délivrance du brevet: **26.11.2008**
(21) Numéro de dépôt: 04767696.0
(22) Date de dépôt: 16.07.2004
(51) Int. Cl.: G01N 1/00

(54) **DISPOSITIF ET PROCEDE DE PRELEVEMENT POUR UN AUTOMATE D'ANALYSE**
PROBENAHMEVORRICHTUNG UND VERFAHREN FÜR EINEN ANALYSEAUTOMATEN
SAMPLING DEVICE AND METHOD FOR AN AUTOMATIC ANALYSER

(30) Priorité: 18.07.2003 FR 0308766
(43) Date de publication de la demande: 31.05.2006
(73) Titulaire: C2 DIAGNOSTICS, 34099 Montpellier (FR)
(72) Inventeur: CHAMPSEIX, Serge, F-19170 Tarnac (FR); CHAMPSEIX, Henri, F-34980 Saint Gely du Fesc (FR)
(74) Mandataire: Pontet, Bernard
(86) Numéro de dépôt international: PCT/FR2004/001872
(87) Numéro de publication internationale: WO 2005/010497

(56) Documents cités:
- EP-A- 0 097 019
- EP-A- 0 468 565
- EP-A- 0 634 660
- WO-A-95/06867
- WO-A-96/07918
- US-A- 4 570 495
- US-A- 5 032 361
- US-A- 5 525 298
- US-B1- 6 447 728

## Description

La présente invention concerne un dispositif pour le prélèvement d'échantillons, dans un automate d'analyse, notamment pour l'analyse du sang. La présente invention concerne en outre un procédé pour le prélèvement, procédé adapté à être utilisé avec un dispositif selon l'invention.

Notamment dans le domaine de l'hématologie, il existe de nombreux automates pour le prélèvement d'échantillons sanguins puis leurs analyses. Les échantillons sont très généralement contenus dans un tube, avant d'y être prélevés, au moins partiellement, par l'automate qui les analyse ensuite. Le prélèvement se fait à l'aide d'une aiguille de prélèvement qui se déplace horizontalement entre le tube et un ou plusieurs bac(s) servant à l'analyse de l'échantillon, après éventuelle dilution, bacs dans lesquels l'aiguille de prélèvement distribue l'échantillon ainsi prélevé.

Un premier mode de déplacement horizontal de l'aiguille est illustré par le document EP0468565. Il se fait par translation linéaire horizontale de l'aiguille. Un deuxième mode de déplacement horizontal de l'aiguille est illustré par les documents US4166094 et US4022067. Dans ce deuxième mode de réalisation, l'aiguille est déplacée en rotation autour d'un axe vertical. Dans les deux modes, l'aiguille est maintenue verticale durant son déplacement. De tels modes de déplacement utilisent des mécanismes très encombrants, donc mal adaptés à la réalisation d'automates de faible encombrement. En outre, de tels mécanismes sont souvent complexes, ayant un grand nombre de pièces, donc coûteux et fragiles. Ces mécanismes peuvent aussi être endommagés par des vapeurs ou des projections issues des bacs au-dessus et à proximité desquels ils se trouvent.

On connaît également le document EP 634 660 A1 illustrant un déplacement uniquement vertical de l'aiguille.

En outre, le document US 5 032 361 montre que l'aiguille doit d'abord se déplacer en translation verticale, et atteindre sa position haute avant de pouvoir être inclinée. Les déplacements en translation et en rotation sont donc dépendants l'un de l'autre.

Par ailleurs, le document US 5 525 298 A illustre une aiguille se déplaçant en rotation et en translation. Toutefois le dispositif est encombrant car les moyens de déplacement en rotation et en translation sont conçus de façon séparée, sans optimisation particulière de l'ensemble.

Par ailleurs, des tuyauteries prévues pour le nettoyage de l'aiguille de prélèvement doivent être mobiles avec l'aiguille, sur toute la longueur de son déplacement. Le fort déplacement de l'aiguille dans les automates de l'art antérieur oblige à prévoir des tuyauteries longues, donc fragilisées. Il en est de même pour les tuyauteries reliant l'aiguille à un système d'échantillonnage, par exemple de type seringue, formant pompe pour aspirer l'échantillon au travers de l'aiguille de prélèvement.

En outre, compte tenu de la disposition de l'aiguille dans un dispositif de prélèvement de l'art antérieur, il peut être difficile de la remplacer. En effet, l'aiguille de prélèvement peut se tordre, s'user ou ses joints d'étanchéité fuir.

Le but de l'invention est de proposer un dispositif de prélèvement simplifié et ayant un encombrement réduit. Dans un tel dispositif, le déplacement de l'aiguille pourra être avantageusement réduit, notamment pour limiter la longueur des tuyauteries. Un autre avantage d'un tel dispositif peut aussi être un montage et/ou un démontage facilité pour l'aiguille dans le dispositif.

Le but de l'invention est aussi de proposer un procédé de prélèvement permettant de résoudre au moins l'un des problèmes posés par les procédés de l'art antérieur, notamment les procédés de déplacement de l'aiguille de prélèvement.

Selon l'invention, un procédé de prélèvement utilisable dans un automate d'analyse, ledit automate comprenant une aiguille de prélèvement d'un échantillon à doser, ledit échantillon étant prélevé dans un récipient, ladite aiguille étant fixée sur un balancier mobile autour d'un axe formant un angle avec ladite aiguille de prélèvement, est caractérisé en ce que l'on déplace l'aiguille de prélèvement en rotation autour de l'axe (X2), et en ce que l'on entraîne l'aiguille de prélèvement en translation relativement au balancier, indépendamment de ladite rotation, par des moyens d'entraînement comprenant un chariot mobile en translation relativement au balancier et en outre une courroie tendue radialement entre une poulie motrice et une poulie libre, l'une des poulies servant de pivot au balancier, le chariot étant fixé sur la courroie. De préférence l'angle entre l'axe du balancier mobile et l'aiguille sera choisi droit. Pour faire un prélèvement on peut, soit déplacer l'aiguille de prélèvement pour qu'elle soit orientée vers le bas, soit la déplacer pour qu'elle soit orientée vers le haut.

Si le récipient est bouché avec un bouchon, on peut orienter le récipient de sorte que le bouchon soit orienté vers le bas, on pré-perce le bouchon avec une aiguille de pré-perçage en l'enfonçant sur la profondeur dudit bouchon, puis on fait coulisser l'aiguille de prélèvement à l'intérieur de l'aiguille de pré-perçage de sorte que sa pointe soit, par exemple, sensiblement affleurante avec la pointe de l'aiguille de pré-perçage, l'aiguille de prélèvement étant orientée vers le haut. Ceci peut permettre de prélever sensiblement la totalité de l'échantillon contenu dans le récipient, quelle que soit notamment la profondeur de ce récipient.

Avantageusement, pour ménager un accès plus facile d'un opérateur à l'aiguille de prélèvement, pour prélever l'échantillon on déplace l'aiguille de prélèvement pour qu'elle forme un angle avec la verticale, notamment vers l'avant de l'automate.

Après avoir prélevé un échantillon, on déplace l'aiguille jusqu'à au moins une position de distribution où l'aiguille est orientée vers le bas au-dessus d'un bac.

Selon l'invention, un dispositif de prélèvement utilisable dans un automate d'analyse, ledit dispositif comprenant une aiguille de prélèvement d'un échantillon à doser, ladite aiguille de prélèvement étant fixée sur un balancier mobile autour d'un axe formant un angle avec ladite aiguille de prélèvement, est caractérisé en ce qu'il comprend des moyens pour entraîner l'aiguille de prélèvement en translation relativement au balancier, indépendamment du mouvement du balancier, lesdits moyens d'entraînement comprenant un chariot mobile en translation relativement au balancier et une courroie tendue radialement entre une poulie motrice et une poulie libre, l'une des poulies servant de pivot au balancier le chariot étant fixé sur la courroie. L'aiguille de prélèvement est mobile en rotation autour d'un axe formant un angle, de préférence sensiblement droit, avec ladite aiguille de prélèvement.

Le dispositif peut comprendre un balancier mobile autour de l'axe, l'aiguille de prélèvement étant montée sur le balancier. Pour plonger dans le récipient ou un bac, l'aiguille sera avantageusement montée mobile en translation relativement au balancier selon un mouvement qui l'éloigne ou la rapproche de l'axe. L'aiguille de prélèvement pourra être montée mobile en translation au travers d'un corps fixe relativement au balancier. Avantageusement le corps peut être fixé sur le balancier par encliquetage ce qui permet un montage et un démontage facilité de l'aiguille, notamment pour la changer.

L'aiguille de prélèvement et le corps peuvent faire partie d'une aiguille double comprenant en outre une aiguille de pré-perçage, l'aiguille de prélèvement étant montée coulissante dans l'aiguille de pré-perçage, l'aiguille de pré-perçage pouvant être montée fixe sur le corps.

Le dispositif peut comprendre des moyens pour entraîner l'aiguille de prélèvement en translation relativement au balancier, lesdits moyens d'entraînement comprenant un chariot mobile en translation relativement au balancier et ladite aiguille étant montée par encliquetage sur le chariot. Ces moyens d'entraînement comprennent en outre une courroie tendue radialement entre une poulie motrice et une poulie libre, l'une des poulies servant de pivot au balancier, le chariot étant fixé sur la courroie et mobile en translation sur un guide.

D'autres particularités et avantages de l'invention ressortiront encore de la description ci-après, relative à des exemples non limitatifs.

Aux dessins annexés :
- la figure 1 est une vue en perspective de trois-quarts arrière droit d'un dispositif de prélèvement selon l'invention;
- la figure 2 est une vue selon la même perspective d'une aiguille double pour le prélèvement, telle qu'elle est utilisée dans le dispositif de la figure 1;
- la figure 3 est une vue de droite représentant schématiquement plusieurs positions singulières du dispositif de la figure 1; et,
- la figure 4 est un détail de la figure 1 présentant le mode de fixation de l'aiguille double sur le balancier.

L'avant, est défini par le côté de l'automate faisant face à un opérateur chargé du prélèvement, au moment du prélèvement. L'arrière est défini par le côté opposé de l'automate. La droite et la gauche sont définies par la droite et la gauche de l'opérateur faisant un prélèvement, c'est à dire regardant depuis l'avant vers l'arrière.

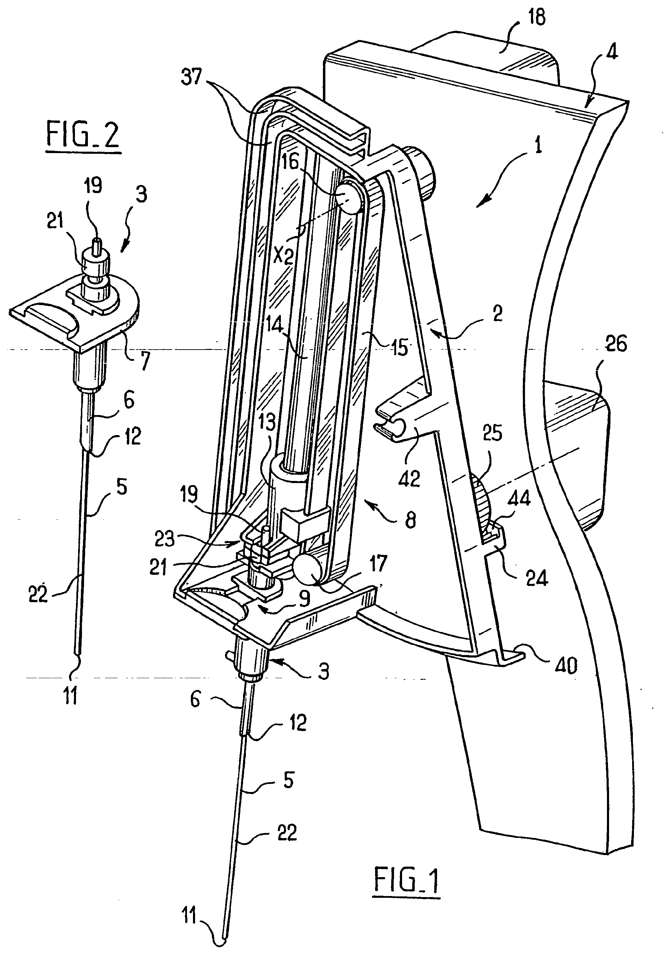

La figure 1 représente un dispositif de prélèvement 1. Ce dispositif fait partie d'un automate pour l'analyse de prélèvements sanguins. Pour simplifier les figures, l'automate n'est pas représenté dans son ensemble. Le dispositif comprend un balancier 2 et une aiguille double 3. Le balancier 2 est monté mobile en rotation autour d'un axe horizontal de balancier X2, relativement à un châssis 4 de l'automate de prélèvement. Le balancier est de forme sensiblement quadrangulaire.

L'aiguille double 3 est représentée isolée à la figure 2. Une telle aiguille comprend une aiguille de prélèvement 5, une aiguille de pré-perçage 6 et un corps 7. Chacune des aiguilles est principalement constituée d'une tige cylindrique et creuse. L'aiguille de pré-perçage 6 est montée fixe relativement au corps 7. L'aiguille de prélèvement 5 est montée coulissante à l'intérieur de l'aiguille de pré-perçage 6. Le corps 7 est fixé sur le balancier 2 de sorte que les extrémités des aiguilles de prélèvement 5 et de pré-perçage 6 les plus éloignées de l'axe de balancier X2 constituent leurs pointes respectives 11,12. Le corps est fixé sur le balancier par des moyens de fixation par encliquetage 9.

Le dispositif de prélèvement 1 comprend en outre des moyens 8 pour déplacer l'aiguille de prélèvement en translation relativement au balancier, en faisant, dans l'exemple décrit, coulisser l'aiguille de prélèvement 5 dans l'aiguille de pré-perçage 5. Les moyens de coulisse 8 comprennent un chariot 13, un guide 14 et une courroie 15. La courroie est montée entre une poulie motrice 16 et une poulie libre 17. La poulie motrice est coaxiale avec l'axe de balancier 2 et comprend un arbre qui sert de pivot au balancier; elle est entraînée par un premier moteur 18, fixé sur le châssis 4. La poulie libre 17 est fixée à proximité des moyens de fixation par encliquetage 9, de sorte que la courroie s'étend sensiblement radialement relativement à l'axe de balancier X2. Le guide 14 est cylindrique et s'étend parallèlement à la direction de la courroie 15. Le chariot est monté coulissant sur le guide et fixé sur la courroie. Une rampe, masquée sur les figures, sert de moyens pour éviter la rotation du chariot autour du guide 14. Dans le mode de réalisation décrit aux figures, cette rampe est une rainure ménagée dans le basculeur. Le chariot comprend un ergot monté coulissant dans cette rainure. Ainsi, l'entraînement de la courroie par le premier moteur 18 provoque le déplacement rectiligne du chariot sur le guide.

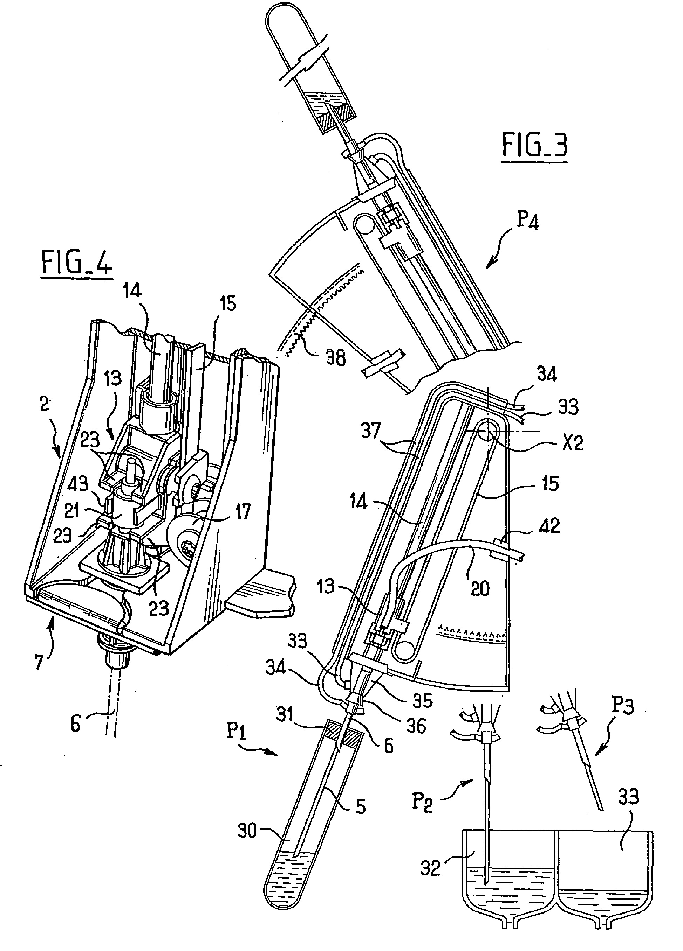

A proximité de son extrémité 19, opposée à sa pointe 11, l'aiguille de prélèvement comprend un renflement cylindrique 21 autour de la tige cylindrique creuse 22. Comme particulièrement illustré à la figure 4, le chariot 13 comprend des moyens 23,43 pour maintenir l'aiguille de prélèvement 5. Ces moyens de maintien comprennent quatre doigts 23 s'étendant sensiblement parallèlement à l'axe de balancier X2, et une pince 43. Lors du montage de l'aiguille sur le balancier, le corps 7 de la double-aiguille 3 est fixé sur le balancier de sorte que les aiguilles 5,6 s'étendent parallèlement au guide 14. De plus, le renflement est introduit parallèlement à l'axe de balancier de sorte que deux doigts 23 soient disposés de part et d'autre de la tige 22 d'un côté du renflement le plus proche de l'extrémité opposée à la pointe, que deux doigts 23 soient disposés de part et d'autre de la tige 22 d'un côté du renflement le plus proche de la pointe 11 et que la pince 43 vienne se refermer par encliquetage autour du renflement 21. Ainsi, lors de son déplacement sur le guide, le chariot 13 entraîne le coulissement de l'aiguille de prélèvement dans l'aiguille de pré-perçage et le corps.

L'aiguille de prélèvement peut ainsi prendre une position rétractée dans laquelle sa pointe est protégée à l'intérieur de l'aiguille de pré-perçage. Cette position correspond à une position du chariot la plus proche de la poulie motrice 16.

L'aiguille de prélèvement peut ainsi prendre une position entièrement étendue à l'extérieur de l'aiguille de pré-perçage, position dans laquelle sa pointe 11 est la plus éloignée de la pointe 12 de l'aiguille de pré-perçage. Cette position correspond à une position du chariot la plus proche de la poulie libre 17. C'est cette position qui est représentée aux figures.

L'aiguille de prélèvement peut aussi prendre toutes les positions, plus ou moins étendues, entre les deux positions précédemment décrites.

Le dispositif de prélèvement comprend en outre des moyens pour basculer le balancier 2 autour de son axe X2. Ainsi, au dos du balancier, c'est à dire sur une face opposée à celle portant la courroie, le guide et l'aiguille double, côté châssis, se trouve une crémaillère 24. La crémaillère 24 forme un arc de cercle autour de l'axe de balancier X2. Un pignon 25, mu par un deuxième moteur 26, engrène sur la crémaillère. Ainsi, la rotation du deuxième moteur entraîne le basculement du balancier autour de son axe, donc, en conséquence, le basculement de l'aiguille double. La crémaillère forme sur le balancier 2 une gorge 44 pour le guidage du balancier 2 sur des faces opposées du pignon 25. La crémaillère est disposée sur le balancier dans une partie du balancier distante de l'axe de balancier. Ainsi, l'effort nécessaire au mouvement de balancement est réduit et le deuxième moteur peut être de puissance et d'encombrement réduits.

On note que dans l'exemple décrit les mouvements de balancement et de translation de l'aiguille de prélèvement sont avantageusement indépendants.

L'extrémité opposée 19 de l'aiguille de prélèvement 5 est branchée via un tuyau de prélèvement 20 (voir figure 3) à un système d'échantillonnage, non représentée aux figures. Il peut être suffisant d'utiliser le volume disponible dans l'aiguille de prélèvement et éventuellement dans le tuyau de prélèvement pour y stocker l'échantillon ainsi prélevé. Le tuyau de prélèvement 20 est maintenu sur le balancier 2 par un clip 42, de sorte que la longueur du tuyau comprise entre le clip et son branchement sur l'aiguille de prélèvement soit suffisante pour ne pas gêner le déplacement du chariot 13 le long du guide 14.

Le dispositif de prélèvement comprend deux autres tuyaux 33,34 prévus pour le rinçage de l'aiguille double. Un premier parmi ces tuyaux est un tuyau 33 de rinçage de l'aiguille de prélèvement 5. Il est prévu pour amener un produit de rinçage jusqu'à une tête de rinçage 35 de l'aiguille de prélèvement. Le deuxième parmi ces tuyaux est un tuyau 34 de rinçage de l'aiguille de pré-perçage 36. Il est prévu pour amener un produit de rinçage jusqu'à une tête de rinçage 36 de l'aiguille de pré-perçage 6. Les têtes de rinçage sont fixes relativement au balancier 2. Des goulottes 37 sont formées sur le balancier pour y guider les tuyaux de rinçage depuis la proximité des têtes de rinçage, jusqu'à proximité de l'axe de balancier X2. Ainsi, en ramenant ces tuyaux à proximité de cet axe, on minimise leur déplacement, en en limitant ainsi la longueur, l'encombrement et la fragilité.

On va maintenant décrire plus précisément le fonctionnement du dispositif de prélèvement en référence à la figure 3. La figure 3 représente quatre positions possibles pour l'aiguille double selon la position du balancier autour de son axe. Chacune de ces positions de l'aiguille correspond à une position angulaire particulière du balancier 2 autour de son axe X2.

Une première position P1 est une position de prélèvement proprement dite. Dans cette position, l'aiguille de prélèvement 5 sert à prélever un échantillon sanguin dans un tube 30. Le tube est fermé par un bouchon 31. Il faut donc, préalablement au prélèvement percer le bouchon. Pour cela on positionne l'aiguille de prélèvement dans sa position rétracté à l'intérieur de l'aiguille de pré-perçage 6. Cette dernière, plus solide, permet de percer le bouchon sans endommager l'aiguille de prélèvement. Ensuite, l'aiguille de pré-perçage étant maintenue au travers du bouchon et sert de passage pour l'aiguille de prélèvement au travers du bouchon. Dans cette première position P1, les pointes 11,12 de l'aiguille double sont dirigées vers le bas et légèrement basculées vers l'avant de sorte qu'elles sont facilement accessibles pour l'opérateur.

L'échantillon prélevé est aspiré au travers de la tige cylindrique creuse de l'aiguille de prélèvement. L'échantillon est ensuite réparti dans un ou plusieurs bacs 32,33 pour y être, par exemple, dilué ou mélangé à des réactifs dans le but d'être analysé. L'automate de la figure 3 comprend deux bacs 32,33. Les bacs sont alignés relativement au déplacement de l'aiguille double, de sorte qu'il existe pour chaque bac une position de cette aiguille pour laquelle ladite aiguille surplombe ledit bac. Une deuxième position est une position de distribution P2 dans laquelle l'aiguille de prélèvement est dirigée pointe vers le bas, sensiblement verticalement, au-dessus d'un premier bac 32. Une troisième position est une position de distribution P3 dans laquelle l'aiguille de prélèvement est dirigée pointe vers le bas, légèrement plus en arrière que dans la deuxième position, au-dessus d'un deuxième bac 33. la deuxième position est une position intermédiaire entre la première P1 et la troisième position P3.

Les bacs sont aussi prévus pour recevoir le produit de rinçage souillé, après qu'il a traversé l'aiguille double. Au lieu de deux tuyaux de rinçage, Il peut être utilisé un seul ou plus de deux tuyaux selon leur destination. Ainsi, ces tuyaux 33,34 peuvent aussi être utilisés, lorsque l'aiguille double est au-dessus d'un bac, pour distribuer un liquide dans le bac, soit au travers, soit le long de l'une des aiguilles 5,6.

Afin de protéger la crémaillère de projections éventuelles en provenance des bacs, un bandeau de protection 40 est formé en arc de cercle sur le balancier au-delà de la crémaillère relativement à l'axe de balancier.

Dans la position de distribution P3, l'aiguille de prélèvement 5 n'est pas complètement étendue, de sorte que sa pointe 11 reste au-dessus des bords des bacs 32,33, en particulier aussi lors du basculement du balancier. Bien sûr, comme illustré dans la position P2 de la figure 3, l'aiguille peut aussi s'étendre à l'intérieur d'un bac jusque dans un liquide de dilution ou réactif qu'il contient soit pour éviter des éclaboussures lors de la distribution de l'échantillon, soit pour prélever une partie de ce que contient le bac. Ainsi, le premier bac peut être consacré à la dilution de l'échantillon de sang, puis le sang ainsi dilué être prélevé dans le premier bac pour être ensuite mélangé à un réactif dans le deuxième bac.

Les trois positions P1,P2,P3 précédemment décrites pour le balancier sont réalisées avec un débattement d'environ quarante degrés du balancier autour de son axe. Ceci correspond sensiblement à la longueur de l'arc formé par la crémaillère 24 sur le balancier dans la configuration de figure 1. Il est possible qu'une position, P3 ou au-delà de P3 relativement à P2, c'est-à-dire vers l'arrière, soit prévue pour permettre le retrait des bacs, pour leur changement ou leur nettoyage.

Une quatrième position P4, elle aussi représentée à la figure 3, peut être atteinte, par exemple, avec une crémaillère 38 prolongée permettant un basculement du levier d'environ 170 degrés. Dans cette position, le balancier est basculé au delà de la première position P1 relativement aux deuxième P2 et troisième P3 positions. De sorte qu'elle forme un angle d'environ 170 degrés avec la troisième position P3. La pointe de l'aiguille est dirigée vers le haut et légèrement basculée vers l'avant pour être plus facilement accessible à l'opérateur.

On notera que les tubes de prélèvement n'ont pas tous la même profondeur. Cela peut poser un problème dans un cas où le prélèvement se fait automatiquement, c'est à dire dans un cas où l'opérateur dispose le tube dans un support, et l'automate réalise ensuite seul et automatiquement les opérations de pré-perçage, prélèvement et distribution. En effet, l'aiguille de prélèvement 5, dans sa position complètement étendue, peut être prévue pour plonger au plus profond d'un tube de faible profondeur. Ainsi, comme illustré à la première position P1 sur la figure 3, il ne sera possible prélever le sang au fond d'un tube 30 de plus grande profondeur, que si le dispositif comprend, par exemple, des moyens pour adapter l'extension de l'aiguille de prélèvement à la profondeur du tube ou des moyens pour positionner le tube relativement à l'aiguille en fonction de la profondeur du tube.

Une position de prélèvement dans laquelle l'aiguille de prélèvement est orientée vers le haut, telle que la quatrième position P4 illustrée à la figure 3, permet de résoudre ce problème lorsque le tube utilisé est bouché par un bouchon. En effet, quelle que soit la profondeur du tube, le bouchon étant orienté vers le bas, le sang contenu dans le tube vient contre le bouchon. Ainsi, on effectue le pré-perçage sur la profondeur du bouchon et on y maintient l'aiguille de pré-perçage; ensuite, il suffit de positionner la pointe 11 de l'aiguille de prélèvement 5 pour recueillir l'échantillon à analyser.

Bien sûr, l'invention n'est pas limitée aux exemples qui viennent d'être décrits et de nombreux aménagements peuvent être apportés à ces exemples sans sortir du cadre de l'invention.

En particulier, le nombre de bacs n'est pas limité à deux mais peut être plus ou moins, selon la nécessité.

Aussi, l'invention n'est pas limitée aux analyses sanguines. Elle peut être utilisée pour tout type de prélèvement.

Un axe de balancier perpendiculaire à la direction d'extension et à la direction de déplacement de l'aiguille de prélèvement, tel qu'illustrés aux figures, est généralement préférable car il permet en particulier de limiter le volume balayé par le dispositif de prélèvement au cours de son fonctionnement. De plus, il permet d'utiliser plus facilement un axe commun pour le basculement du balancier et pour l'une des poulies. Cependant, selon la configuration de l'automate d'analyse, le balancier peut former un angle différent d'un angle droit avec l'aiguille de prélèvement.

On peut utiliser d'autres moyens d'entraînement pour déplacer l'aiguille de prélèvement relativement au balancier, tels qu'une crémaillère ou un système vis/écrou. Ces moyens, plus rigides qu'une courroie, sont préférables si l'on utilise l'aiguille de prélèvement en temps qu'aiguille de perçage pour le bouchon.

De même, plutôt qu'une crémaillère en arc de cercle, des moyens pour le balancement du balancier peuvent comprendre un système vis/écrou, une courroie ou un câble. Ces moyens de balancier peuvent aussi être prévus pour permettre au balancier de faire un tour complet autour de son axe.

Les angles formés entre les différentes positions du balancier autour de son axe peuvent aussi différer de ceux précédemment décrits.

Le dispositif de prélèvement peut encore ne pas comprendre d'aiguille de pré-perçage. Ce peut être le cas lorsqu'il n'est pas prévu que les tubes comprennent un bouchon, qui peut avoir été enlevé au préalable, ou lorsque l'aiguille de prélèvement est prévue suffisamment solide pour être utilisée afin de percer le bouchon.

## Revendications

1. Procédé de prélèvement utilisable dans un automate d'analyse, ledit automate comprenant une aiguille de prélèvement (5) d'un échantillon à doser, ledit échantillon étant prélevé dans un récipient (30), ladite aiguille étant fixée sur un balancier mobile autour d'un axe (X2) formant un angle avec ladite aiguille de prélèvement, **caractérisé en ce qu'**il comprend les étapes suivantes :
- déplacer l'aiguille de prélèvement en rotation autour de l'axe (X2);
- entraîner l'aiguille de prélèvement en translation relativement au balancier, indépendamment de ladite rotation, par des moyens d'entraînement comprenant un chariot mobile (13) en translation relativement au balancier et en outre une courroie (15) tendue radialement entre une poulie motrice (16) et une poulie libre (17), l'une des poulies servant de pivot au balancier, le chariot étant fixé sur la courroie.

2. Procédé selon la revendication 1, **caractérisé en ce que** pour prélever l'échantillon on déplace l'aiguille de prélèvement pour qu'elle soit orientée vers le bas.

3. Procédé selon la revendication 1 ou 2, **caractérisé en ce que** pour prélever l'échantillon on déplace l'aiguille de prélèvement pour qu'elle soit orientée vers le haut.

4. Procédé selon la revendication 3, **caractérisé en ce que** si le récipient est bouché avec un bouchon (31), on oriente le récipient de sorte que le bouchon soit orienté vers le bas puis on perce le bouchon avec une aiguille en l'enfonçant au moins sur la profondeur dudit bouchon.

5. Procédé selon l'une des revendications 1 à 4, **caractérisé en ce que** pour prélever l'échantillon on déplace l'aiguille de prélèvement pour qu'elle forme un angle avec la verticale.

6. Procédé selon l'une des revendications 1 à 5, **caractérisé en ce qu'**après avoir prélevé un échantillon, on déplace l'aiguille jusqu'à une position de distribution (P2,P3) où l'aiguille est orientée vers le bas au-dessus d'un bac (32,33).

7. Procédé selon la revendication 6, **caractérisé en ce qu'**il existe une position de l'aiguille, en rotation autour de l'axe telle que l'on peut retirer le bac de dedans l'automate.

8. Dispositif de prélèvement utilisable dans un automate d'analyse, ledit dispositif comprenant une aiguille de prélèvement (5) d'un échantillon à doser, ladite aiguille de prélèvement étant fixée sur un balancier mobile autour d'un axe (X2) formant un angle avec ladite aiguille de prélèvement, **caractérisé en ce qu'**il comprend des moyens (13-18) pour entraîner l'aiguille de prélèvement en translation relativement au balancier, indépendamment du mouvement du balancier, lesdits moyens d'entraînement comprenant un chariot mobile (13) en translation relativement au balancier et une courroie (15) tendue radialement entre une poulie motrice (16) et une poulie libre (17), l'une des poulies servant de pivot au balancier, le chariot étant fixé sur la courroie.

9. Dispositif selon la revendication 8, **caractérisé en ce qu'**il comprend des moyens pour que l'aiguille fasse un tour complet autour de l'axe.

10. Dispositif selon la revendication 8 ou 9, **caractérisé en ce que** l'angle formé par l'axe et l'aiguille est un angle sensiblement droit.

11. Dispositif selon l'une des revendications 8 à 10, **caractérisé en ce que** l'aiguille de prélèvement est montée mobile en translation relativement au balancier selon un mouvement qui l'éloigne ou la rapproche de l'axe.

12. Dispositif selon l'une des revendications 8 à 11, **caractérisé en ce qu'**il comprend des moyens qui rendent indépendants les mouvements de translation et de rotation.

13. Dispositif selon l'une des revendications 8 à 12, **caractérisé en ce que** l'aiguille de prélèvement est montée mobile en translation au travers d'un corps (7) fixe relativement au balancier.

14. Dispositif selon la revendication 13, **caractérisé en ce qu'**il comprend des moyens (9) pour fixer le corps par encliquetage sur le balancier.

15. Dispositif selon la revendication 13 ou 14, **caractérisé en ce que** l'aiguille de prélèvement et le corps font partie d'une aiguille double (3) comprenant en outre une aiguille de pré-perçage (6), l'aiguille de prélèvement étant montée coulissante dans l'aiguille de pré-perçage.

16. Dispositif selon la revendication 15, **caractérisé en ce que** l'aiguille de pré-perçage est montée fixe sur le corps.

17. Dispositif selon l'une des revendications 8 à 16, **caractérisé en ce que** l'aiguille de prélèvement est montée par encliquetage sur le chariot.

18. Dispositif selon l'une des revendications 8 à 16, **caractérisé en ce que** le chariot est fixé sur la courroie et mobile en translation sur un guide (14).

19. Dispositif selon l'une des revendications 8 à 18, **caractérisé en ce qu'**au moins une aiguille (5,6) comprend une tête de rinçage (35,36), **en ce qu'**il comprend un tuyau (33,34) pour amener un produit de rinçage jusqu'à ladite tête de rinçage, le balancier comprenant au moins une goulotte (37) pour guider ledit tuyau depuis la proximité de la tête de rinçage jusqu'à la proximité de l'axe (X2).

20. Dispositif selon l'une des revendications 8 à 19, **caractérisé en ce que** le balancier comprend des moyens (24,25) pour basculer le balancier autour de son axe.

21. Dispositif selon la revendication 20, **caractérisé en ce que** les moyens de basculement comprennent une crémaillère (24) formant un arc autour de l'axe (X2) et un pignon (25) engrainant sur la crémaillère pour entraîner le balancier en rotation autour de l'axe.

22. Dispositif selon la revendication 21, **caractérisé en ce que** la crémaillère est disposée sur le balancier dans une partie du balancier distante de l'axe.

23. Dispositif selon la revendication 22, **caractérisé en ce que** les moyens de basculement comprennent une courroie ou un câble ou un dispositif vis/écrou.

## Claims

1. Sampling method that can be used in an automatic analysis apparatus, said automatic apparatus included a needle (5) for taking a sample to be analyzed, said sample being removed from a receptacle (30), said needle being fixed on a rocker mobile about an axis (X2) forming an angle with said sampling needle, **characterized in that** it comprises the following steps:
- rotating the sampling needle about the axis (X2);
- driving the sampling needle in translation relative to the rocker, independently of said rotation, by driving means comprising a carriage (13) mobile in translation relative to the rocker and also a belt (15) stretched radially between a drive pulley (16) and a loose pulley (17), one of these pulleys serving as a pivot on the rocker, the carriage being fixed on the belt.

2. Method according to claim 1, **characterized in that**, to remove the sample, the sampling needle is moved such that it points downwards.

3. Method according to claim 1, **characterized in that**, to remove the sample, the sampling needle is moved such that it points upwards.

4. Method according to claim 3, **characterized in that** if the receptacle is stopped with a bung (31), the receptacle is directed such that the bung points downwards, then the bung is pierced with a needle by inserting it at least to the depth of said bung.

5. Method according to one of claims 1 to 4, **characterized in that**, to remove the sample, the sampling needle is moved such that it forms an angle with the vertical.

6. Method according to one of claims 1 to 5, **characterized in that**, after having removed a sample, the needle is moved to a distribution position (P2, P3) where the needle points downwards above a vessel (32, 33).

7. Method according to claim 6, **characterized in that** there is a position for the needle, in rotation about the axis such that the vessel inside the automatic apparatus can me removed.

8. Sampling device usable in an automatic analysis apparatus, said device including a needle (5) for taking a sample to be analyzed, said sampling needle being fixed on a rocker mobile about an axis (X2) forming an angle with said sampling needle, **characterized in that** it comprises means (13-18) for driving the sampling needle in translation relative to the rocker, independently of the rocker movement, said driving means comprising a carriage (13) mobile in translation relative to the rocker and a belt (15) stretched radially between a drive pulley (16) and a loose pulley (17), one of these pulleys serving as a pivot on the rocker, the carriage being fixed on the belt.

9. Device according to claim 8, **characterized in that** it comprises means for making the needle turning completely about the axis.

10. Device according to claims 8 or 9, **characterized in that** the angle formed by the axis and the needle is an approximately right angle.

11. Device according to one of claims 8 to 10, **characterized in that** the sampling needle is mounted mobile in translation relative to the rocker describing a movement which moves it away from or towards the axis.

12. Device according to one of claims 8 to 11, **characterized in that** it comprises means that make the translation and rotation movements independent.

13. Device according to one of claims 8 to 12, **characterized in that** the sampling needle is mounted mobile in translation through a body (7) fixed relative to the rocker.

14. Device according to claim 13, **characterized in that** it includes means (9) for fixing the body by locking on the rocker.

15. Device according to claim 13 or 14, **characterized in that** the sampling needle and the body form part of a double needle (3) also comprising a pre-piercing needle (6), the sampling needle being mounted sliding in the pre-piercing needle.

16. Device according to claim 15, **characterized in that** the pre-piercing needle is mounted fixed on the body.

17. Device according to one of claims 8 to 16, **characterized in that** the sampling needle is mounted by locking on the carriage.

18. Device according to one of claims 8 to 16, **characterized in that** the carriage is mobile in translation on a guide (14).

19. Device according to one of claims 8 to 18, **characterized in that** at least one needle (5, 6) includes a rinsing head (35, 36), it includes a tube (33, 34) to carry a rinsing product to said rinsing head, the rocker including at least one chute (37) to guide said tube from the vicinity of the rinsing head to the vicinity of the axis (X2).

20. Device according to one of claims 8 to 19, **characterized in that** the rocker includes means (24, 25) for pivoting the rocker about its axis.

21. Device according to claim 20, **characterized in that** the pivoting means include a rack (24) forming an arc about the axis (X2) and a pinion (25) engaging in the rack to drive the rocker in rotation about the axis.

22. Device according to claim 21, **characterized in that** the rack is arranged on the rocker in a part away from the axis.

23. Device according to claim 22, **characterized in that** the pivoting means comprise a belt or a cable or screw/nut device.

## Patentansprüche

1. In einem Analyseautomaten durchführbares Entnahmeverfahren, wobei dieser Automat eine Entnahmenadel (5) für eine zu dosierende Probe aufweist, diese Probe aus einem Behältnis (30) entnommen wird und die Nadel an einem Schwenkelement angeordnet ist, das um eine Achse (X2) beweglich ist, die unter einem Winkel zu der Entnahmenadel verläuft, **dadurch gekennzeichnet, dass** das Verfahren folgende Verfahrensschritte umfasst: Verschwenken der Entnahmenadel durch Drehen um die Achse (X2); translatorisches Bewegen der Entnahmenadel relativ zum Schwenkelement unabhängig von dessen Verschwenkbewegung, mittels Antriebsmitteln, die einen translatorisch relativ zum Schwenkelement beweglichen Schlitten (13) sowie einen Riemen (15) aufweisen, der radial zwischen einer Antriebsscheibe (16) und einer frei drehenden Scheibe (17) gespannt ist, wobei eine der Scheiben als Drehachse für das Schwenkelement dient und der Schlitten mit dem Riemen gekoppelt ist.

2. Verfahren nach Anspruch 1, **dadurch gekennzeichnet, dass** zum Entnehmen der Probe die Entnahmenadel so verstellt wird, dass sie nach unten zeigt.

3. Verfahren nach Anspruch 1 oder 2, **dadurch gekennzeichnet, dass** zum Entnehmen der Probe die Entnahmenadel so verstellt wird, dass sie nach oben zeigt.

4. Verfahren nach Anspruch 3, **dadurch gekennzeichnet, dass** bei einem mit einem Stopfen (31) verschlossenen Behältnis das Behältnis so ausgerichtet wird, dass der Stopfen nach unten gerichtet ist, wobei der Stopfen mit einer Nadel durchstoßen wird, die mindestens auf die Tiefe des Stopfens eintaucht.

5. Verfahren nach einem der Ansprüche 1 bis 4, **dadurch gekennzeichnet, dass** zum Entnehmen der Probe die Entnahmenadel so bewegt wird, dass sie einen Winkel mit der Senkrechten bildet.

6. Verfahren nach einem der Ansprüche 1 bis 5, **dadurch gekennzeichnet, dass** nach dem Entnehmen der Probe die Entnahmenadel in eine Verteilposition (P2, P3) verstellt wird, in der die Nadel nach unten über einen Behälter (32, 33) gerichtet ist.

7. Verfahren nach Anspruch 6, **dadurch gekennzeichnet, dass** es eine Nadelstellung infolge einer Schwenkbewegung um die Achse herum gibt, in der der Behälter aus dem Automaten entnommen werden kann.

8. Entnahmevorrichtung für einen Analyseautomaten, mit einer Entnahmenadel (5) für eine zu dosierende Probe, wobei die Entnahmenadel an einem Schwenkelement angeordnet ist, das um eine Achse (X2) beweglich ist, die unter einem Winkel zu der Entnahmenadel verläuft, **dadurch gekennzeichnet, dass** die Vorrichtung Antriebsmittel (13-18) zum translatorischen Verstellen der Entnahmenadel relativ zum Schwenkelement unabhängig von der Bewegung des Schwenkelements aufweist, wobei die Antriebsmittel einen translatorisch relativ zum Schwenkelement verfahrbaren Schlitten (13) und einen Riemen (15) umfassen, der radial zwischen einer Antriebsscheibe (16) und einer frei drehenden Scheibe (17) gespannt ist, wobei eine der Scheiben als Drehachse für das Schwenkelement dient und der Schlitten an dem Riemen gekoppelt ist.

9. Vorrichtung nach Anspruch 8, **dadurch gekennzeichnet, dass** sie Mittel aufweist, die bewirken, dass die Nadel eine vollständige Drehung um die Achse herum macht.

10. Vorrichtung nach Anspruch 8 oder 9, **dadurch gekennzeichnet, dass** der von der Achse und der Nadel gebildete Winkel ein im Wesentlichen rechter Winkel ist.

11. Vorrichtung nach einem der Ansprüche 8 bis 10, **dadurch gekennzeichnet, dass** die Entnahmenadel so angeordnet ist, dass sie translatorisch relativ zum Schwenkelement beweglich ist und dabei eine Bewegung macht, die sie von der Achse entfernt oder sie der Achse näher bringt.

12. Vorrichtung nach einem der Ansprüche 8 bis 11, **dadurch gekennzeichnet, dass** sie Mittel umfasst, die die Translationsbewegung und die Rotationsbewegung voneinander unabhängig machen.

13. Vorrichtung nach einem der Ansprüche 8 bis 12, **dadurch gekennzeichnet, dass** die Entnahmenadel durch einen relativ zum Schwenkelement festen Körper (7) in translatorisch beweglich angeordnet ist.

14. Vorrichtung nach Anspruch 13, **dadurch gekennzeichnet, dass** sie Mittel (9) umfasst, um den Körper mittels einer Rastverbindung am Schwenkelement zu befestigen.

15. Vorrichtung nach Anspruch 13 oder 14, **dadurch gekennzeichnet, dass** die Entnahmenadel und der Körper zu einer Doppelnadel (3) gehören, die ferner eine Vorstechnadel (6) umfasst, wobei die Entnahmenadel verschieblich in der Vorstechnadel angeordnet ist.

16. Vorrichtung nach Anspruch 15, **dadurch gekennzeichnet, dass** die Vorstechnadel fest an dem Körper montiert ist.

17. Vorrichtung nach einem der Ansprüche 8 bis 16, **dadurch gekennzeichnet, dass** die Entnahmenadel mittels einer Rastverbindung an dem Schlitten befestigt ist.

18. Vorrichtung nach einem der Ansprüche 8 bis 16, **dadurch gekennzeichnet, dass** der Schlitten an dem Riemen befestigt und entlang einer Führung (14) translatorisch beweglich verschiebbar ist.

19. Vorrichtung nach einem der Ansprüche 8 bis 18, **dadurch gekennzeichnet, dass** mindestens eine Nadel (5, 6) einen Spülkopf (35, 36) hat, dass die Vorrichtung eine Leitung (33, 34) umfasst, um ein Spülprodukt zum Spülkopf zu leiten, wobei das Schwenkelement mindestens einen Kanal (37) aufweist, in dem die Leitung von der Nähe des Spülkopfes bis in die Nähe der Achse (X2) geführt ist.

20. Vorrichtung nach einem der Ansprüche 8 bis 19, **dadurch gekennzeichnet, dass** das Schwenkelement Mittel (24, 25) aufweist, um es um seine Achse zu verschwenken.

21. Vorrichtung nach Anspruch 20, **dadurch gekennzeichnet, dass** die Schwenkmittel bogenförmig um die Achse (X2) verlaufende Zahnstange (24) sowie ein Ritzel (25) umfassen, das mit der Zahnstange im Eingriff steht, um das Schwenkelement um die Achse zu verschwenken.

22. Vorrichtung nach Anspruch 21, **dadurch gekennzeichnet, dass** die Zahnstange am Schwenkelement an einem von der Achse entfernten Bereich angeordnet ist.

23. Vorrichtung nach Anspruch 22, **dadurch gekennzeichnet, dass** die Schwenkmittel einen Riemen oder ein Kabel oder eine Schraube/Mutter-Vorrichtung umfassen.
